# EUROPEAN PATENT APPLICATION

(11) **EP 4 349 454 A1**
(43) Date of publication of application: **10.04.2024**
(21) Application number: 22832769.8
(22) Date of filing: 10.06.2022
(51) Int. Cl.: B01D 53/22, B01D 69/02, C07C 31/04

(54) **METHOD FOR HIGHLY PURIFYING CONDENSABLE PRODUCT IN MEMBRANE REACTOR**

(30) Priority: 28.06.2021 JP 2021106597
(71) Applicant: JFE Steel Corporation, Tokyo 100-0011 (JP)
(72) Inventor: NISHIKAWA Yuta, Tokyo 100-0011 (JP); SHIGAKI Nobuyuki, Tokyo 100-0011 (JP)
(74) Representative: Hoffmann Eitle
(86) International application number: PCT/JP2022/023450
(87) International publication number: WO 2023/276612

(57) **Abstract**

An object of the present invention is to provide a method for highly purifying a condensable product in a membrane reactor, which can highly purify the condensable product by improving the substance amount ratio of one condensable product in the largest amount among two or more condensable products that have permeated to the permeation side of the membrane reactor. The method for highly purifying a condensable product in a membrane reactor in the present invention includes: a synthesis reaction step of introducing a raw material gas containing at least one of carbon monoxide gas and carbon dioxide gas, and hydrogen gas into a first space of a membrane reactor including a separation membrane, the first space being on a non-permeation side and filled with a synthesis catalyst, and a second space being on a permeation side, to synthesize two or more condensable products; a membrane separation step of causing the condensable products generated in the first space in the synthesis reaction step to permeate into the second space through the separation membrane for separating; and a decomposition reaction step of decomposing the condensable products that have permeated into the second space, and improving the substance amount ratio of one condensable product in the largest amount among the condensable products that have permeated.

## Description

### TECHNICAL FIELD

The present invention relates to a method for highly purifying a condensable product in a membrane reactor.

### BACKGROUND ART

In recent years, the development of a technology called carbon capture and utilization (CCU) in which carbon dioxide (hereinafter, also referred to as "CO₂") gas is chemically reacted with hydrogen (hereinafter, also referred to as "H₂") gas to be converted into a valuable material for recycling has been studied as one of carbon dioxide emission reduction technologies.

Various CCU technologies have been studied, and examples of the chemical reaction to be used include a reaction in which a reverse aqueous gas shift reaction (Formula (1)), a conversion reaction to methanol (Formula (2)), and a conversion reaction to ethanol (Formula (3)) are combined, and the like.

CO₂+H₂⇔CO+H₂O (1)

CO+2H₂⇔CH₃OH (2)

2CO+4H₂⇔C₂H₅OH+H₂O (3)

These alcohol synthesis reactions involve chemical equilibrium and have a thermodynamic upper limit. Therefore, in order to improve the yield, it is necessary to increase the pressure of the reaction or recycle an unreacted gas. Further, there is a problem that a separation facility for water vapor generated simultaneously with alcohol is required, and the facility is increased in size.

As an approach for exceeding the thermodynamic upper limit and reducing facility cost for separation of methanol and water vapor, there is a method of simultaneously performing shift of reaction equilibrium toward the product side and separation of methanol and water vapor by selectively separating any one of methanol and water vapor from the reaction system. For example, a process using a membrane reactor is proposed in which methanol or water vapor generated on the non-permeation side is selectively separated to the permeation side by a membrane reactor provided with a zeolite membrane, and the thermodynamic upper limit can be exceeded and the methanol concentration can be improved as compared with the conventional method (Patent Literatures 1, 2, and 3). Since the permeation driving force of methanol or water vapor is a partial pressure difference between permeate components on the non-permeation side and the permeation side, the methanol synthesis reaction is performed at a thermodynamically favorable high pressure on the non-permeation side, and the product is separated to the permeation side at a low pressure, so that a synergistic effect of shift of reaction equilibrium and promotion of separation can be exerted.

### CITATION LIST

### PATENT LITERATURE

Patent Literature 1: JP 2007-055970 A
Patent Literature 2: JP 2018-008940 A
Patent Literature 3: JP 2020-023488 A
Patent Literature 4: JP 2020-132439 A

### SUMMARY OF INVENTION

### TECHNICAL PROBLEMS

A separation membrane used in the above process using a membrane reactor has a function of selectively permeating any one of methanol and water vapor. However, in Patent Literatures 1 and 3, the details of permeation performance are not described, and the influence of the permeation performance on the methanol production cost has not been studied. Patent Literature 2 describes that it is preferable that the separation factor of water vapor to methanol is 230 or more because 99% or more of generated methanol does not permeate and can be recovered, but a method for recovering and utilizing less than 1% of permeated methanol has not been studied. When the water permeated on the permeation side contains methanol, in order to discharge the water, the chemical oxygen demand (hereinafter also referred to as "COD") in the factory wastewater needs to be 120 mg/L (liter), which is the daily average as the environmental standard value, that is, 0.012% by mass or less. However, in order to synthesize methanol and water from CO₂ and hydrogen using the membrane reactor described in Patent Literature 2 and to make the wastewater on the permeation side equal to or less than the environmental standard value, the separation factor of water vapor to methanol needs to be at least 1,480,000 or more.

As described above, a high-purity product cannot be obtained unless the membrane performance is very high, and there has been a problem that it is difficult to omit distillation with a large energy cost even in the process using a membrane reactor.

Also, Patent Literature 4 proposes that water separated in a membrane reactor is swept with a sweeping gas containing carbon monoxide or a hydrocarbon-based gas, and then used in a facility row for producing hydrogen gas by an aqueous gas shift reaction or a steam reforming reaction. In Patent Literature 4, the amount of wastewater treatment is reduced because generated water is used in a separate process, but carbon monoxide or a hydrocarbon-based gas used for a sweeping gas is not necessarily required as a raw material gas, and there is a problem that it is necessary to install a gas facility for a sweeping gas separately from the raw material gas.

The separation membrane provided in the membrane reactor selectively separates a specific compound from the reaction system, but currently synthesizable separation membranes are not zero in permeation of gases other than the specific compound. In order to obtain high purity methanol of 99.8% by mass which is the JIS standard of industrial methanol, high purity water with a COD daily average of 120 mg/L or less on the permeation side, a separation membrane having very high separation performance is required. However, separation performance of a separation membrane that can be currently synthesized is not sufficient, and a distillation facility itself at a subsequent stage is still required in order to obtain high purity methanol or water.

The present invention has been made in view of the above problems, and an object of the present invention is to provide a method for highly purifying a condensable product in a membrane reactor, which can highly purify the condensable product by improving the substance amount ratio of one condensable product in the largest amount among two or more condensable products that have permeated to the permeation side of the membrane reactor, in the membrane reactor including a separation membrane having wide separation performance without requiring a distillation facility having a large energy cost at the subsequent stage.

### SOLUTION TO PROBLEMS

As a result of intensive studies on the above problems, the present inventors have found that the above problems can be solved by decomposing a condensable product, which permeates through a separation membrane and is separated, by a decomposition catalyst in the process using a membrane reactor.

Specifically, the present inventors have found that the above problems can be solved by the following configuration.
(1) A method for highly purifying a condensable product in a membrane reactor, the method comprising:
   a synthesis reaction step of introducing a raw material gas containing at least one of carbon monoxide gas and carbon dioxide gas, and hydrogen gas into a first space (E1) of a membrane reactor (E) including a separation membrane (M), the first space (E1) being on a non-permeation side and filled with a synthesis catalyst (C1), and a second space (E2) being on a permeation side, to synthesize two or more condensable products by an action of the synthesis catalyst (C1);
   a membrane separation step of causing the two or more condensable products generated in the first space (E1) in the synthesis reaction step to permeate into the second space (E2) through the separation membrane (M) for separating, in which the separation membrane (M) is a separation membrane having permselectivity in which the permeability coefficient of at least one of the two or more condensable products is larger than the permeability coefficient of any gas of carbon monoxide gas, carbon dioxide gas, and hydrogen gas; and
   a decomposition reaction step of decomposing, by an action of a decomposition catalyst (C2), the two or more condensable products that have permeated from the first space (E1) into the second space (E2) in the membrane separation step, and improving the substance amount ratio of one condensable product in the largest amount among the two or more condensable products that have permeated.
(2) The method for highly purifying a condensable product in a membrane reactor according to (1) above, wherein the second space (E2) is filled with the decomposition catalyst (C2), and the decomposition reaction step is performed in the second space (E2) .
(3) The method for highly purifying a condensable product in a membrane reactor according to (1) or (2) above, wherein the two or more condensable products are alcohol and water.
(4) The method for highly purifying a condensable product in a membrane reactor according to any one of (1) to (3) above, wherein in the decomposition reaction step, a decomposition product gas containing hydrogen gas is generated by decomposition of the two or more condensable products, and
   the method further comprising a gas-liquid separation step of separating, by a gas-liquid separation method, a mixed gas containing one condensable product having a substance amount ratio improved by the decomposition reaction step and the decomposition product gas.
(5) The method for highly purifying a condensable product in a membrane reactor according to (4) above, wherein the decomposition product gas separated in the gas-liquid separation step is reused as the raw material gas in the synthesis reaction step.
(6) The method for highly purifying a condensable product in a membrane reactor according to any one of (1) to (5) above, wherein a sweeping gas is made to pass through the second space (E2) .
(7) The method for highly purifying a condensable product in a membrane reactor according to (6) above, wherein the sweeping gas contains hydrogen gas.
(8) The method for highly purifying a condensable product in a membrane reactor according to any one of (1) to (7) above, wherein
   the two or more condensable products are methanol and water, and
   as performance of the separation membrane, the separation factor of water vapor to methanol is 8.5 or more, or the separation factor of methanol to water vapor is 3 or more.

### ADVANTAGEOUS EFFECTS OF INVENTION

According to the present invention, a high-purity product can be obtained on the permeation side with a simple facility without requiring a new distillation facility for the permeated condensable product in a membrane reactor provided with a separation membrane with a wide range of performance.

Further, according to the present invention, a distillation facility having a large energy cost can be omitted, and therefore a high-purity product can be obtained at a lower cost than that in a conventional membrane reactor process.

### BRIEF DESCRIPTION OF DRAWINGS

[FIG. 1] FIG. 1 is a view showing one aspect of a method for highly purifying a condensable product in a membrane reactor of the present invention.
[FIG. 2] FIG. 2 is a view showing one aspect of a preferred aspect of the method for highly purifying a condensable product in a membrane reactor of the present invention.
[FIG. 3] FIG. 3 is a view showing one aspect of another preferred aspect of the method for highly purifying a condensable product in a membrane reactor of the present invention.
[FIG. 4] FIG. 4 is a view showing one example of the method for highly purifying a condensable product in a membrane reactor of the present invention.

### DESCRIPTION OF EMBODIMENTS

Hereinafter, a method for highly purifying a condensable product in a membrane reactor of the present invention will be described.

A method for highly purifying a condensable product in a membrane reactor of the present invention (hereinafter, also referred to as "method of the present invention") includes:
a synthesis reaction step of introducing a raw material gas containing at least one of carbon monoxide gas and carbon dioxide gas, and hydrogen gas into a first space (E1) of a membrane reactor (E) including a separation membrane (M), the first space (E1) being on a non-permeation side and filled with a synthesis catalyst (C1), and a second space (E2) being on a permeation side, to synthesize two or more condensable products by an action of the synthesis catalyst (C1);
a membrane separation step of causing the two or more condensable products generated in the first space (E1) in the synthesis reaction step to permeate into the second space (E2) through the separation membrane (M) for separating, in which the separation membrane (M) is a separation membrane having permselectivity in which the permeability coefficient of at least one of the two or more condensable products is larger than the permeability coefficient of any gas of carbon monoxide gas, carbon dioxide gas, and hydrogen gas; and
a decomposition reaction step of decomposing, by an action of a decomposition catalyst (C2), the two or more condensable products that have permeated from the first space (E1) into the second space (E2) in the membrane separation step, and improving the substance amount ratio of one condensable product in the largest amount among the two or more condensable products that have permeated.

First, the method of the present invention will be described with reference to the drawings.

### [Description with reference to drawings]

### [FIG. 1]

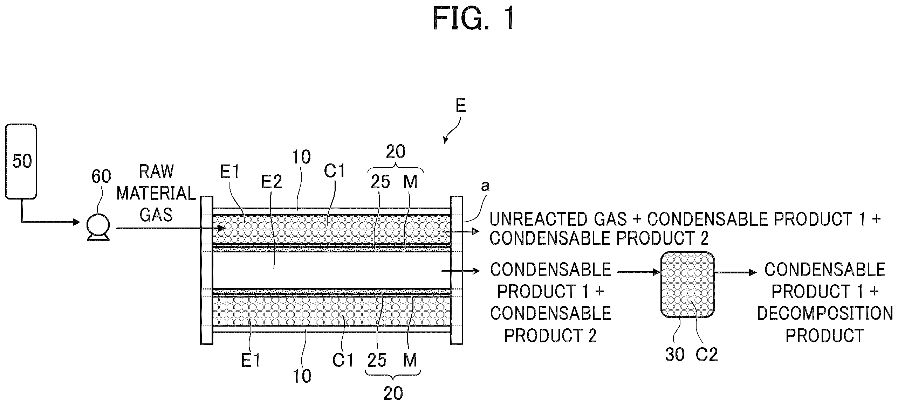

FIG. 1 is a view showing one aspect of the method of the present invention.

In FIG. 1, a membrane reactor E has a double tube structure of a reaction tube 10 and a separation tube 20. A first space E1 (first space E1 on a non-permeation side) is defined between the reaction tube 10 and the separation tube 20, and a second space E2 (second space E2 on a permeation side) is defined inside the separation tube 20. The separation tube 20 includes an inner tube 25 and a separation membrane M present on the surface on the reaction tube 10 side. The first space E1 is filled with a synthesis catalyst C1.

First, in the synthesis reaction step, a raw material gas containing at least one of carbon monoxide gas and carbon dioxide gas, and hydrogen gas is introduced into the first space E1 of the membrane reactor E. Thus, two condensable products (condensable product 1 and condensable product 2 (target product)) are synthesized by an action of the synthesis catalyst C1.

The condensable products and an unreacted gas (raw material gas that has not reacted) that have not permeated the separation membrane M are caused to flow out from the outlet side a of the first space E1, and the condensable product 2 (target product) is recovered.

In the membrane separation step, the condensable products generated in the first space E1 in the synthesis reaction step permeate into the second space E2 through the separation membrane M, and are separated.

The separation membrane M is a separation membrane having permselectivity in which the permeability coefficient of the condensable product 1 is larger than the permeability coefficient of any gas of carbon monoxide gas, carbon dioxide gas, and hydrogen gas. Further, the separation membrane M is a separation membrane having different permeability coefficients of the condensable products (condensable product 1, condensable product 2), and the permeability coefficient of the condensable product 1 is larger than that of the condensable product 2. That is, the condensable product 1 easily permeates, and the condensable product 2 hardly permeates. Therefore, the substance amount ratio of the condensable product 1 in the permeated condensable products is higher than that before permeation.

In the decomposition reaction step, the condensable products (condensable product 1, condensable product 2) that have permeated from the first space E1 into the second space E2 are introduced into a decomposition reactor 30 filled with a decomposition catalyst C2. A decomposition reaction of the condensable products (condensable product 1, condensable product 2) (typically, a reverse reaction of the synthesis reaction in the synthesis reaction step) proceeds by an action of the decomposition catalyst C2, and the condensable products are consumed to generate a decomposition product.

Here, as described above, the substance amount ratio of the condensable product 1 in the permeated condensable products is higher than that before permeation. Therefore, when the decomposition reaction proceeds and the condensable products are consumed, the substance amount ratio of the condensable product 1 in the condensable products is further improved, and finally, the condensable product 2 disappears first.

As a result, the condensable product 1 in the condensable products is highly purified.

### [FIG. 2]

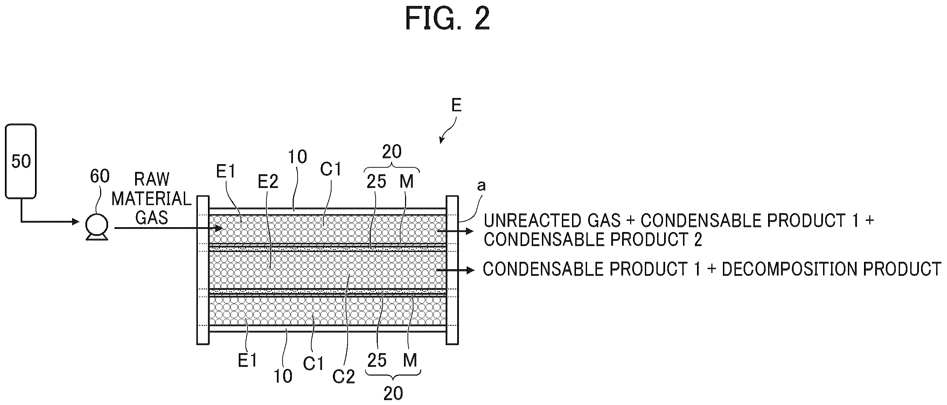

FIG. 2 is a view showing one aspect of a preferred aspect of the method of the present invention.

In FIG. 2, a membrane reactor E has a double tube structure of a reaction tube 10 and a separation tube 20. A first space E1 (first space E1 on a non-permeation side) is defined between the reaction tube 10 and the separation tube 20, and a second space E2 (second space E2 on a permeation side) is defined inside the separation tube 20. Here, the separation tube 20 includes an inner tube 25 and a separation membrane M present on the surface on the reaction tube 10 side. The first space E1 is filled with the synthesis catalyst C1, and the second space E2 is filled with the decomposition catalyst C2.

FIG. 2 is the same as FIG. 1 in the synthesis reaction step and the membrane separation step, but the difference is that the decomposition reaction of the condensable products (condensable product 1, condensable product 2) that have permeated from the first space E1 into the second space E2 (typically, a reverse reaction of the synthesis reaction in the synthesis reaction step) proceeds by the action of the decomposition catalyst C2 filled in the second space to generate a decomposition product (decomposition reaction step).

Here, as described above, the substance amount ratio of the condensable product 1 in the permeated condensable products is higher than that before permeation. Therefore, when the decomposition reaction proceeds and the condensable products are consumed, the substance amount ratio of the condensable product 1 in the condensable products is further improved, and finally, the condensable product 2 disappears first. As a result, the condensable product 1 in the condensable products is highly purified.

### [FIG. 3]

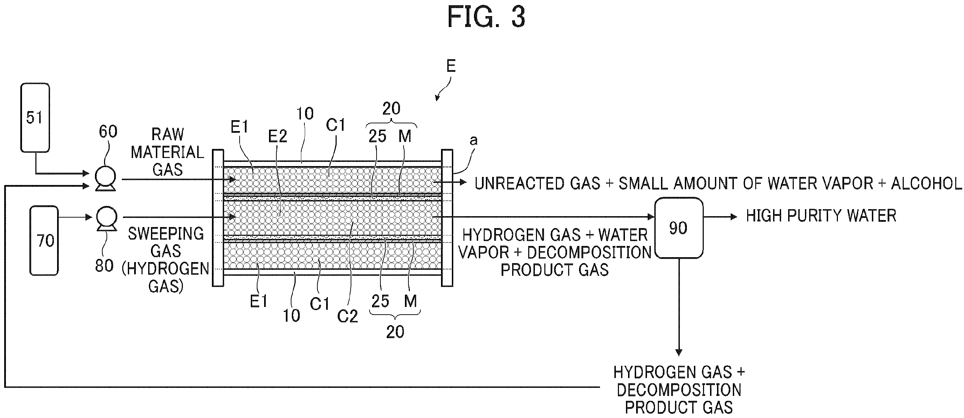

FIG. 3 is a view showing one aspect of another preferred aspect of the present invention.

In FIG. 3, a membrane reactor E is the same as in FIG. 2.

First, in the synthesis reaction step, a raw material gas containing carbon dioxide gas and hydrogen gas is introduced into the first space E1 of the membrane reactor E. Thus, two condensable products (water (water vapor) and alcohol (for example, methanol) (target product)) are synthesized by the action of the synthesis catalyst C1.

The condensable products and an unreacted gas (raw material gas that has not reacted) that have not permeated the separation membrane M are caused to flow out from the outlet side a of the first space E1, and the alcohol (target product) is recovered.

In the membrane separation step, the condensable products generated in the first space E1 in the synthesis reaction step permeate into the second space E2 through the separation membrane M, and are separated.

The separation membrane M is a separation membrane having permselectivity in which the permeability coefficient of water vapor is larger than the permeability coefficient of any gas of carbon monoxide gas, carbon dioxide gas, and hydrogen gas. Further, the separation membrane M is a separation membrane having different permeability coefficients of condensable products (water vapor, alcohol), and the permeability coefficient of water vapor is larger than that of alcohol. That is, water vapor easily permeates, and alcohol hardly permeates. Therefore, the substance amount ratio of water vapor in the permeated condensable products is higher than that before permeation.

In the decomposition reaction step, a decomposition reaction of the condensable products (water vapor, alcohol) that have permeated from the first space E1 into the second space E2 (typically, a reverse reaction of the reaction in the synthesis reaction step) proceeds by the action of the decomposition catalyst C2 filled in the second space to generate decomposition product gases (carbon dioxide gas, hydrogen gas).

Here, as described above, the substance amount ratio of water vapor in the permeated condensable products is higher than that before permeation. Therefore, when the decomposition reaction proceeds and the condensable products are consumed, the substance amount ratio of water vapor in the condensable products is further improved, and finally, alcohol disappears first.

In this way, water vapor is highly purified.

Further, in FIG. 3, a sweeping gas containing hydrogen gas is made to pass through the second space E2. As a result, the mixed gas containing the hydrogen gas (sweeping gas), the water vapor with the improved substance amount ratio as described above, and the decomposition product gas flows out from the second space E2.

Then, the mixed gas flowing out of the second space E2 is separated by a gas-liquid separator 90 (gas-liquid separation step). As a result, the mixed gas is separated into liquid (high-purity water) and gas (hydrogen gas, decomposition product gas), and the water is highly purified.

Next, the membrane reactor (E) used in the method of the present invention (hereinafter, also simply referred to as "membrane separator") will now be described in detail.

### [Membrane reactor]

The membrane reactor includes a separation membrane (M) (hereinafter, also simply referred to as "separation membrane"), a first space (E1) being on a non-permeation side (hereinafter, also simply referred to as "first space") and filled with a synthesis catalyst (C1) (hereinafter, also simply referred to as a "synthesis catalyst"), and a second space (E2) being on a permeation side (hereinafter, also simply referred to as "second space").

### [Separation membrane]

The separation membrane is a separation membrane having permselectivity in which the permeability coefficient of at least one of two or more condensable products synthesized in the synthesis reaction step is larger than the permeability coefficient of any gas of carbon monoxide gas, carbon dioxide gas, and hydrogen gas.

In the separation membrane, for the reason that the effect of the present invention is more excellent, the permeability coefficient of one condensable product to be highly purified is preferably larger than the permeability coefficients of other condensable products, but the performance required for the separation membrane varies depending on the condensable product and the required purity.

When two condensable products are generated in the synthesis reaction step, the separation membrane is preferably a separation membrane having different permeability coefficients of the two condensable products for the reason that the effect of the present invention is more excellent.

For example, when the synthesis reaction in the synthesis reaction step is a conversion reaction to methanol (combination of formula (1) and formula (2)), and methanol and water (water vapor) are generated as condensable products, the separation membrane is preferably a separation membrane having different permeability coefficients of methanol and water vapor for the reason that the effect of the present invention is more excellent.

Examples of the separation membrane that selectively permeates water vapor (water vapor separation membrane) include hydrophilic zeolite membranes such as A-type (LTA-type) zeolite membranes and T-type zeolite membranes.

Examples of the separation membrane that selectively permeates methanol (methanol separation membrane) include MFI-type zeolite membranes in which the Si/Al ratio and hydrothermal synthesis conditions are precisely controlled as described in Faraday Discuss., 2017,198, and 509-527, and the like.

### [Separation tube]

The membrane separator preferably includes a separation tube including a porous (for example, porous alumina) inner tube and a separation membrane present on the surface of the inner tube for the reason that the effect of the present invention is more excellent. The separation membrane itself may function as the separation tube.

### [First space]

The first space is a space being on the non-permeation side of the separation membrane. Usually, a membrane separation tube has a double structure of a reaction tube (outer tube) and a separation tube. In this case, the first space is a space between the reaction tube and the separation tube.

### <Synthesis catalyst>

The first space is filled with a synthesis catalyst. The synthesis catalyst is not particularly limited as long as it is a catalyst for a synthesis reaction to be described later. The synthesis catalyst is preferably a metal catalyst, and more preferably a copper-based or copper-zinc-based catalyst for the reason that the effect of the present invention is more excellent.

### [Second space]

The second space is a space being on the permeation side of the separation membrane. Usually, a membrane separation tube has a double structure of a reaction tube (outer tube) and a separation tube. In this case, the second space is a space inside the separation tube.

The second space may be filled with a decomposition catalyst described later. In this case, a decomposition reaction step described later is performed in the second space.

Next, each step will be described in detail.

### [Synthesis reaction step]

The synthesis reaction step is a step of introducing a raw material gas containing at least one of carbon monoxide gas and carbon dioxide gas, and hydrogen gas into a first space of a membrane reactor including a separation membrane, a first space being on a non-permeation side filled with the synthesis catalyst, and a second space being on a permeation side, to synthesize two or more condensable products by an action of the synthesis catalyst.

### [Membrane reactor]

The membrane reactor is as described above.

### [Raw material gas]

The raw material gas contains at least one of carbon monoxide gas and carbon dioxide gas, and hydrogen gas. The raw material gas preferably contains carbon dioxide gas and hydrogen gas for the reason that the effect of the present invention is more excellent.

### [Synthesis reaction]

Specific examples of the synthesis reaction when the raw material gas contains carbon dioxide gas and hydrogen gas include a reaction in which the above formulas (1) and (2) are combined, a reaction in which the formulas (1) and (3) are combined, and the like. Specific examples of the synthesis reaction when the raw material gas contains carbon monoxide gas and hydrogen gas include the following formulas (2) and (3).

### [Condensable product]

In the synthesis reaction step, two or more condensable products are synthesized. In the present specification, the term "condensable" means a gas under the conditions of 150°C and 1 atm and a liquid under the conditions of 25°C and 1 atm.

The two or more condensable products are not particularly limited, but it is preferable that the two or more condensable products contain alcohol and water since the decomposition reaction of alcohol and water can proceed in a temperature region where an alcohol synthesis reaction proceeds, and thus at least a part of the heat necessary for proceeding the decomposition reaction can be covered by the heat of the gas flowing out of the second space.

### [Membrane separation step]

The membrane separation step is a step of causing the two or more condensable products generated in the first space in the synthesis reaction step to permeate into the second space through the separation membrane for separating, in which the separation membrane is a separation membrane having permselectivity in which the permeability coefficient of at least one of the two or more condensable products is larger than the permeability coefficient of any gas of carbon monoxide gas, carbon dioxide gas, and hydrogen gas.

The condensable product generated in the synthesis reaction step are removed from the non-permeation side to the permeation side, and the equilibrium is shifted to the product side, whereby the synthesis reaction step efficiently proceeds. The two or more condensable products that have permeated into the second space in the membrane separation step are discharged to the outside of the reactor by own pressure. However, when the sweeping gas is made to pass through the second space, the discharge to the outside of the membrane reactor can be promoted, and the equilibrium of the decomposition reaction can be shifted. Since the decomposition reaction can be promoted by changing the composition conditions, it is preferable to make the sweeping gas pass through.

### [Separation membrane]

The separation membrane is as described above.

### [Sweeping gas]

The type of the sweeping gas is not particularly limited, but it is preferable that the sweeping gas contains hydrogen capable of reusing a decomposition product (decomposition product gas) as a raw material gas in a synthesis reaction step without requiring a separation facility between the sweeping gas and the decomposition product gas containing hydrogen while maintaining durability with the decomposition catalyst as a reducing atmosphere.

### [Decomposition reaction step]

The decomposition reaction step is a step of decomposing, by an action of a decomposition catalyst (C2) (hereinafter, also simply referred to as a "decomposition catalyst"), the two or more condensable products that have permeated from the first space into the second space in the membrane separation step, and improving the substance amount ratio of one condensable product in the largest amount among the two or more condensable products that have permeated.

### [Decomposition reaction]

The decomposition reaction is typically a reverse reaction of the synthesis reaction in the synthesis reaction step.

For example, in a case where the synthesis reaction is a conversion reaction to methanol combining the above formulas (1) and (2), the decomposition reaction is typically a reaction of formula (4).

CH₃OH+H₂O⇔CO₂+3H₂ (4)

By the decomposition reaction, the substance amount ratio of one condensable product in the largest amount among the two or more condensable products that have permeated through the separation membrane is improved.

The heat of the gas flowing out of the second space can be effectively used as the heat necessary for proceeding the decomposition reaction.

The decomposition reaction may be performed in a reaction facility, filled with the decomposition catalyst, into which the gas flowing out of the second space is introduced, but in the case where the temperature range of the synthesis reaction step is a temperature range in which the decomposition reaction step can proceed, if the second space is filled with the decomposition catalyst and the decomposition reaction step is performed in the second space, the condensable product can be highly purified without requiring a facility other than the membrane reactor.

In addition, since the second space is filled with the decomposition catalyst which is a solid, heat conductivity from the first space to the second space is improved, and the space volume is reduced, so that the discharge of the product from the second space is promoted, which is more preferable.

### [Decomposition catalyst]

The decomposition catalyst is not particularly limited as long as it is a catalyst for a decomposition reaction, but is preferably a metal catalyst, more preferably a copper-based or copper-zinc-based catalyst, and still more preferably a copper-zinc-based catalyst, for the reason that the effect of the present invention is more excellent.

### [Decomposition product]

The decomposition product purified by the decomposition reaction of two or more condensable products is preferably a non-condensable gas (decomposition product gas) because it can be separated by gas-liquid separation. The decomposition product gas preferably contains hydrogen gas.

### [Gas-liquid separation step]

The mixed gas of the condensable product and the decomposition product gas containing the hydrogen gas generated in the decomposition reaction step can be used as it is, but it is preferable to install a gas-liquid separation facility in order to obtain only a high-purity condensable product. That is, it is preferable that the method of the present invention further includes a gas-liquid separation step of separating, by a gas-liquid separation method, a mixed gas containing one condensable product having a substance amount ratio improved by the decomposition reaction step and a decomposition product gas containing hydrogen gas.

In addition, it is preferable that the decomposition product gas (particularly, when hydrogen gas is contained) separated in the gas-liquid separation step is reused as a raw material gas in the synthesis reaction step.

### [Case where synthesis reaction is conversion reaction to methanol combining formulas (1) and (2)]

As a typical aspect of the method of the present invention, a case where the synthesis reaction is a conversion reaction to methanol combining the formulas (1) and (2) will be described.

In the conversion reaction to methanol combining the formulas (1) and (2), methanol and water are generated from carbon dioxide gas and hydrogen gas at a substance amount ratio of 1:1. In addition, since the permeated water vapor is subjected to a decomposition reaction (formula (4)) at a substance amount ratio of 1:1 with methanol, a condensable product at a high concentration among the permeated methanol and water vapor is unreacted, and the substance amount ratio of any one of methanol and water vapor in the condensable product can be increased to increase the purity.

At this time, formula (5) proceeds as a side reaction, but as shown in Applied Catalysis B: Environmental 99, 43 (2010), by appropriately selecting the decomposition catalyst (C2), it can be controlled to selectively proceed the formula (4).

CH₃OH⇔CO+2H₂ (5)

Methanol synthesis in the membrane reactor (E) efficiently proceeds at 150°C or higher, and the pressure in the second space (E2) is preferably in the range of 10 to 500 kPaA. Under such conditions, when the exhaust heat of the membrane reactor (E) is used, the gas flowing out to the second space (E2) is 150°C or higher and 10 to 500 kPaA.

Here, when a separation membrane (M) that selectively permeates water vapor is used, the concentration of methanol contained in the permeated water is preferably 0.012% by mass or less, which is lower than the environmental standard value (COD daily average 120 mg/L) in the factory wastewater.

In order to proceed the reaction of the formula (4) under the conditions of 150°C or higher and 10 to 500 kPaA to achieve a methanol concentration of 0.012% by mass or less from a mixed gas of methanol and water vapor, it is thermodynamically preferable that the substance amount ratio of the mixed gas of methanol and water vapor is at least water vapor/methanol = 8.5 or more. From the above restrictions, as the performance of the separation membrane (M), the separation factor of water vapor to methanol is preferably at least 8.5 or more.

Also, when a separation membrane (M) that selectively permeates methanol is used, the concentration of the permeated methanol is preferably 99.8% by mass or more, which is the JIS standard for industrial methanol.

In order to proceed the reaction of the formula (4) under the conditions of 150°C or higher and 10 to 500 kPaA to achieve a methanol concentration of 99.8% by mass or more from a mixed gas of methanol and water vapor, it is thermodynamically preferable that the substance amount ratio of the mixed gas of methanol and water vapor is at least water vapor/methanol = 0.33 or less. From the above restrictions, as the performance of the separation membrane (M), the separation factor of methanol to water vapor is preferably at least 3 or more. In the present specification, the permeability coefficient and the separation factor are values determined by reaction conditions.

As described above, the upper limit or lower limit of the separation membrane performance determined by the reaction product and the necessary purity is thermodynamically determined.

The existing separation membrane sufficiently satisfies the above separation membrane performance, and according to the present invention, a high-purity condensable product can be synthesized without undergoing distillation by installing a decomposition reaction step in a membrane reactor process using the existing separation membrane.

### EXAMPLES

Hereinafter, the present invention will be described in more detail with reference to Examples, but the present invention is not limited thereto.

### [Example 1]

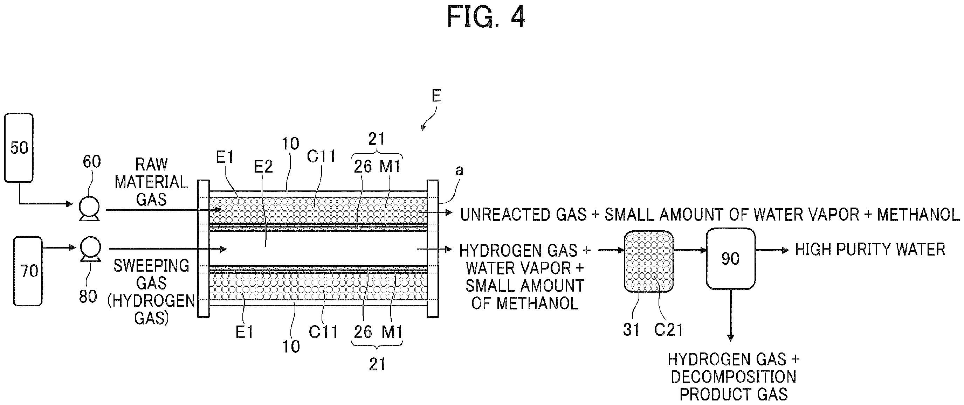

FIG. 4 is a view showing one example of a method of the present invention.

In FIG. 4, a membrane reactor E has a double tube structure of a reaction tube 10 and a separation tube 21. A first space E1 (first space E1 being on a non-permeation side) is defined between the reaction tube 10 and the separation tube 21, and a second space E2 (second space E2 being on a permeation side) is defined inside the separation tube 21. The separation tube 21 includes a porous alumina tube (inner tube) 26 and a water vapor separation membrane M1 (obtained by precipitating LTA-type zeolite) present on the surface on the reaction tube 10 side. The first space E1 is filled with a copper-zinc-based synthesis catalyst C11.

A raw material gas (carbon dioxide gas, hydrogen gas) was introduced into the first space E1 by a compressor 60 at 5 MPaA and 200°C, and a sweeping gas (hydrogen gas) was introduced into the second space E2 inside the separation tube 20 by a blower 80 at normal pressure and 160°C.

### <Synthesis reaction step>

A raw material gas (25 NL/min carbon dioxide gas, 75 NL/min hydrogen gas) was introduced into the first space E1. By introducing the raw material gas into the first space E1, water vapor and methanol (target product) were synthesized by an action of the synthesis catalyst C11 (the above formula (1)).

An unreacted gas (raw material gas that did not react) and the condensable products (water vapor, methanol) that remained in the first space E1 without permeating the water vapor separation membrane M1 were caused to flow out from the outlet side a of the first space E1, and methanol was recovered.

### <Membrane separation step>

The condensable products (water vapor, methanol) generated in the first space in the synthesis reaction step permeated into the second space E2 through the water vapor separation membrane M1 for separating.

The water vapor separation membrane M1 is a separation membrane having permselectivity in which the permeability coefficient of water vapor as one of the condensable products is larger than the permeability coefficient of any gas of carbon monoxide gas, carbon dioxide gas, and hydrogen gas, and corresponds to the separation membrane (M).

Also, as the performance of the water vapor separation membrane M1, the separation factor of water vapor to methanol (methanol gas) is 1000. Therefore, the main component of the separated condensable product is water vapor.

Further, the sweeping gas (400 NL/min hydrogen gas) was made to pass through the second space E2 to allow the condensable products (water vapor, methanol) separated in the membrane separation step to flow out of the second space E2.

The gas flowing out of the second space E2 contains hydrogen gas as the sweeping gas and the condensable products (water vapor, methanol) separated in the membrane separation step.

### <Decomposition reaction step>

The gas flowing out of the second space E2 through the membrane separation step was directly introduced into a decomposition reactor 31 filled with a copper-zinc-based decomposition catalyst C21 while being thermally insulated from the outside. By an action of the decomposition catalyst C21, a decomposition reaction of the condensable products (water vapor, methanol) (the above formula (4)) (a reverse reaction of the synthesis reaction) proceeded to generate decomposition product gases (carbon dioxide gas, hydrogen gas).

### <Gas-liquid separation step>

The mixed gas (hydrogen gas, decomposition product gas) subjected to the decomposition reaction step was separated by a gas-liquid separator 90 to recover a liquid containing water.

### [Comparative Example 1]

The same membrane reactor E as in Example 1 was used. The synthesis reaction step, the membrane separation step, and the outflow step were performed in the same manner as in Example 1. The mixed gas flowing out of the second space E2 without undergoing the decomposition reaction step was cooled, and a liquid containing water was recovered by a gas-liquid separator.

### [Methanol concentration]

For Example 1 and Comparative Example 1, the concentration of methanol contained in the liquid recovered by gas-liquid separation after cooling the mixed gas flowing out of the second space E2 of the membrane reactor E is shown in Table 1 below. The lower the concentration of methanol, the higher the concentration of water.

**[Table 1]**

| Table 1 | Methanol concentration [% by mass] |
|---|---|
| Comparative Example 1 | 7.08 |
| Example 1 | 0.01 |

As can be seen from Table 1, the methanol concentration of Example 1 was 0.01% by mass, and the methanol concentration of Comparative Example 1 was 7.08% by mass. As compared with Comparative Example 1, it was found that in Example 1, the methanol concentration was sufficiently low, the methanol that has permeated into the second space E2 was decomposed, and the high purity water satisfying the environmental standard value in the factory wastewater was recovered.

### DESCRIPTION OF SYMBOLS

- 10: Reaction tube
- 20: Separation tube
- 21: Separation tube
- 25: Inner tube
- 26: Porous alumina tube (inner tube)
- 30: Decomposition reactor
- 31: Decomposition reactor
- 50: Raw material gas tank
- 51: Carbon dioxide gas tank
- 60: Compressor
- 70: Sweeping gas tank
- 80: Blower
- 90: Gas-liquid separator
- E: Membrane reactor
- E1: First space
- a: Outlet side of first space E1
- E2: Second space
- M: Separation membrane
- M1: Water vapor separation membrane
- C1: Synthesis catalyst
- C11: Synthesis catalyst (copper-zinc-based catalyst)
- C2: Decomposition catalyst
- C21: Decomposition catalyst (copper-zinc-based catalyst)

## Claims

1. A method for highly purifying a condensable product in a membrane reactor, the method comprising:
a synthesis reaction step of introducing a raw material gas containing at least one of carbon monoxide gas and carbon dioxide gas, and hydrogen gas into a first space (E1) of a membrane reactor (E) including a separation membrane (M), the first space (E1) being on a non-permeation side and filled with a synthesis catalyst (C1), and a second space (E2) being on a permeation side, to synthesize two or more condensable products by an action of the synthesis catalyst (C1);
a membrane separation step of causing the two or more condensable products generated in the first space (E1) in the synthesis reaction step to permeate into the second space (E2) through the separation membrane (M) for separating, in which the separation membrane (M) is a separation membrane having permselectivity in which the permeability coefficient of at least one of the two or more condensable products is larger than the permeability coefficient of any gas of carbon monoxide gas, carbon dioxide gas, and hydrogen gas; and
a decomposition reaction step of decomposing, by an action of a decomposition catalyst (C2), the two or more condensable products that have permeated from the first space (E1) into the second space (E2) in the membrane separation step, and improving the substance amount ratio of one condensable product in the largest amount among the two or more condensable products that have permeated.

2. The method for highly purifying a condensable product in a membrane reactor according to claim 1, wherein the second space (E2) is filled with the decomposition catalyst (C2), and the decomposition reaction step is performed in the second space (E2) .

3. The method for highly purifying a condensable product in a membrane reactor according to claim 1 or 2, wherein the two or more condensable products are alcohol and water.

4. The method for highly purifying a condensable product in a membrane reactor according to any one of claims 1 to 3, wherein in the decomposition reaction step, a decomposition product gas containing hydrogen gas is generated by decomposition of the two or more condensable products, and
the method further comprising a gas-liquid separation step of separating, by a gas-liquid separation method, a mixed gas containing one condensable product having a substance amount ratio improved by the decomposition reaction step and the decomposition product gas.

5. The method for highly purifying a condensable product in a membrane reactor according to claim 4, wherein the decomposition product gas separated in the gas-liquid separation step is reused as the raw material gas in the synthesis reaction step.

6. The method for highly purifying a condensable product in a membrane reactor according to any one of claims 1 to 5, wherein a sweeping gas is made to pass through the second space (E2).

7. The method for highly purifying a condensable product in a membrane reactor according to claim 6, wherein the sweeping gas contains hydrogen gas.

8. The method for highly purifying a condensable product in a membrane reactor according to any one of claims 1 to 7, wherein
the two or more condensable products are methanol and water, and
as performance of the separation membrane, the separation factor of water vapor to methanol is 8.5 or more, or the separation factor of methanol to water vapor is 3 or more.
